# EUROPÄISCHE PATENTSCHRIFT

(11) **EP 2 152 022 B1**
(45) Veröffentlichungstag und Bekanntmachung des Hinweises auf die Patenterteilung: **23.03.2016**
(21) Anmeldenummer: 08162108.8
(22) Anmeldetag: 08.08.2008
(51) Int. Cl.: H04Q 9/00, H04L 12/403

(54) **Erkennung von Telegrammgrenzen**
Recognition of telegram limits
Reconnaissance des limites de télégramme

(43) Veröffentlichungstag der Anmeldung: 10.02.2010
(73) Patentinhaber: VEGA Grieshaber KG, 77709 Wolfach (DE)
(72) Erfinder: Isenmann, Andreas, 77716, Haslach (DE)
(74) Vertreter: Kopf, Korbinian Paul

(56) Entgegenhaltungen:
- US-A- 4 230 989
- HUNG-CUONG LE, HERVÉ GUYENNET, NOUREDDINE ZERHOUNI: "Redundant Communication Avoidance for event-Driven Wireless Sensor Network" IJCSNS INTERNATIONAL JOURNAL OF COMPUTER SCIENCE AND NETWORK SECURITY, Bd. 7, Nr. 3, März 2007 (2007-03), Seiten 193-200, XP002520941

## Beschreibung

Die vorliegende Erfindung betrifft das technische Gebiet der Messtechnik. Insbesondere betrifft die vorliegende Erfindung eine Messvorrichtung, ein Verfahren zum Kommunizieren zwischen Messvorrichtungen auf einer geteilten Netzinfrastruktur, ein Programmelement zum Kommunizieren zwischen Messvorrichtungen auf einer geteilten Netzinfrastruktur und ein computerlesbares Speicherrnedium.

In der Messtechnik mögen Prozessdaten an anderen physikalischen Orte aufgenommen werden als dann diese Prozessdaten, beispielsweise Messwerte oder Prozessvariablen, angezeigt und weiterverarbeitet werden. So können beispielsweise in einer Industrieaniage Behälter, von denen Füllstände bzw. Drücke aufgenommen werden sollen, über ein weit erstrecktes Firmengelände verteilt sein. Die Füllstände bzw. Drücke sollen jedoch von einer zentralen Warte aus überwacht werden können und daher mögen die Messwerte oder Proressvariablen von den Messorten zu der zentralen Warte übertragen werden.

Zum Übertragen der Prozessdaten mögen verschiedene Lösungen existieren. Beispielsweise mögen sich dedizierte Leitungen einsetzen lassen, um mittels der 4 ... 20 mA Technologie Prozessdaten zu übertragen. Die 4 ... 20 mA Technologie mag beispielsweise in Zweiteiter-Messgeräten oder Vierleiter-Messgeraiten zum Einsatz kommen. Für eine derartige Messanordnung mag der Materialaufwand insbesondere für die Verkabelung hoch sein. Um die dedizierten Leitungen der Messgeräte an eine zentrale Warte anzuschließen mag nämlich eine sternförmigen Verkabelung nötig sein.

Ferner mögen Bussysteme existieren, welche es erlauben, auf einem geteilten Medium, einem Shared Medium, einer gemeinsamen Netzinfrastruktur oder auf einem Bus die Prozessdaten an die jeweils an dem Bus angeschlossenen Sensoren, Aktoren, Feldgeräte, Steuerungsgeräte oder Prozessleitrechner zu verteilen. Der gemeinsam genutzte Bus mag zu einer Materialreduktion und zur Wartungsminimierung für die Verkabelung beitragen.

Die US 4,230,989 offenbart ein Funkkommunikationssystem mit einer Zentralstation und einer Anzahl von weiteren Stationen. Die Übertragungen im System beginnen mit einem "Beginn der Nachricht"-Zeichen und enden mit einem "Ende der Nachricht"-Zeichen. Weiter enthält jede Nachricht, die von der Zentralstation an die Stationen übermittelt wird, eine Adresse, die die Station eindeutig identifiziert. Ein Adressdecoderschaltkreis überwacht die Adresssignale, die von einer Station nach dem "Beginn der Nachricht-Zeichen empfangen werden. Wenn der Adressdecoderschaltkreis die Adresse seiner Station dekodiert, aktiviert er ein Speicherregister, so dass die Nachrichtenzeichen, die auf die Adresse folgen und die dem "Ende der Nachricht"-Zeichen vorhergehen, temporär gespeichert werden. Wenn die im Register gespeicherte Nachricht zeigt, dass Daten zurückübertragen werden sollen, werden die Daten zurück an die Zentralstation gesendet.

Die Veröffentlichung "Redundant communication avoidance for event-driven wireless sensor network" von Hung-Cuong Le et al. aus IJCSNS, Vol. 7, No. 3, März 2007 offenbart ein Protokoll für ein Ereignis getriebenes drahtloses Sensornetzwerk. Dabei hört vor dem Übertragen eines Alarms ein Knoten des Netzwerks die Nachrichten seiner Nachbarn mit, um nachzusehen, ob der Alarm bereits durch die Nachbarn gesendet wurde.

In jüngster Zeit mögen Funksysteme entwickelt worden sein, welche es erlauben mögen auf eine Verkabelung im Wesentlichen zu verzichten und statt einer Verkabelung die Luft als sog. Shared Medium zu verwenden.

Da es beim Einsetzen eines Shared Medium möglich sein mag, dass jeder Teilnehmer, jedes Feldgerät, jeder Aktor oder jeder Sensor auf das Sharemedium zugreifen kann und somit das Shared Medium belegen kann, mag ein geregelter Ablauf für den Zugriff auf den Bus entwickelt worden sein. Um einen solchen Ablauf zu ermöglichen, mag ein Busteilnehmer oder ein Feldgerät als ein sog. Master konfiguriert sein, während andere Feldgeräte als sog. Slaves konfiguriert sein mögen. Der Master mag den Zugriff auf den Bus und insbesondere den Zugriff auf einen Slave oder auf eine Vielzahl von Slaves steuern, welche an das Shared Medium angeschlossen sein mögen.

In einer Master-Slave-Kommunikation mag von dem Master ein Anfragetelegramm an einen Slave gesendet werden, der dieses Anfragetelegramm mittels eines Antworttelegramms beantworten kann. Existieren mehrere Slaves oder existiert eine Vielzahl von Slaves, so mögen diese Slaves nacheinander von dem Master abgefragt werden können.

Kommuniziert ein Master zu mehreren Slaves, so kann es vorkommen, dass ein Slave die Antwort eines anderen Slaves als einen Beginn eines Anfragetelegramms des Masters interpretiert. Um eine solche Fehlinterpretation im Wesentlichen zu verhindern, mag eine Zugriffsregelung auf das Shared Medium nötig sein. Eine Zugriffsregelung mag darin bestehen, dass jeder Kommunikationsteilnehmer vor dem Versenden einer Anfrage oder vor dem Versenden einer Antwort jeweils eine vorgegebene Wartezeit warten mag, bevor ein Zugriff auf das Shared Medium erfolgen kann. Eine solche Wartezeit mag auch als eine Timeoutzeit bezeichnet werden. D. h. vor dem Versenden einer Anfrage oder einer Antwort über das Shared Medium mag von dem Master und/oder von einem Slave eine Timeoutzeit abzuwarten sein, bevor der Zugriff auf das Shared Medium erfolgten kann.

Damit im Wesentlichen alle an einem Shared Medium angeschlossenen und insbesondere an einer Kommunikation beteiligten Kommunikationsteilnehmer in dem Zeitpunkt empfangsbereit sein mögen, wenn zumindest einer der Teilnehmer mit der Übertragung eines Telegramms beginnt, mag in den Feldgeräten eine Timeoutsteuerung vorhanden sein. Diese Timeoutsteuerung mag steuern, dass vor dem Versenden der Anfrage bzw. der Antwort, also vor dem Zugriff auf den Bus, die von dem jeweiligen System vorgegebene Timeoutzeit abgewartet wird. Wegen dieser Timeoutzeit oder Wartezeit mag jedoch der Datendurchsatz auf dem Shared Medium gering sein.

Es mag daher ein Bedürfnis existieren, ein effektiveres Kommunizieren zwischen Feldgeräten zu ermöglichen.

Gemäß einem exemplarischen Ausführungsbeispiel der vorliegenden Erfindung mag eine Messvorrichtung, ein Verfahren zum Kommunizieren zwischen Messvorrichtungen auf einer geteilten Netzinfrastruktur, ein Programmelement zum Kommunizieren zwischen Messvorrichtungen auf einer geteilten Netzinfrastruktur und ein computerlesbares Speichermedium bereitgestellt werden.

Gemäß einem spezifischen exemplarischen Ausführungsbeispiel der vorliegenden Erfindung mag die Messvorrichtung eine Empfangseinrichtung, eine Verarbeitungseinrichtung und eine Sendeeinrichtung aufweisen. Die Empfangseinrichtung mag zum Empfang von zumindest einem Telegrammfragment eingerichtet sein. Die Empfangseinrichtung mag dabei so eingerichtet sein, dass die Empfangseinrichtung ein Ziel des zumindest einen Telegrammfragments bestimmen kann. Ferner mag gemäß einem Ausführungsbeispiel der vorliegenden Erfindung die Empfangseinrichtung eingerichtet sein, in Abhängigkeit von dem Ziel des zumindest einen Telegrammfragments einen Betriebszustand der Verarbeitungseinrichtung einzustellen. Die Empfangseinrichtung mag ferner eingerichtet sein, aus dem zumindest einen Telegrammfragment, einem Telegrammblock oder ein Gesamttelegramm zu erstellen oder zusammen zu setzen.

Die Verarbeitungseinrichtung mag eingerichtet sein dass sie in einem ersten Betriebszustand eine Telegrammgrenze des Telegrammsblocks bestimmen kann und einen Typ des Telegrammsblocks bestimmen kann.

Ferner mag die Verarbeitungseinrichtung eingerichtet sein in einem zweiten Betriebszustand, welcher sich von dem ersten Betriebszustand unterscheiden mag, eine Telegrammgrenze des Telegrammblocks zu bestimmen und die Sendeeinrichtung derart anzusteuern, dass die Sendeeinrichtung ein Telegramm im Anschluss an die Telegrammgrenze sendet, d. h. unmittelbar nach dem Telegrammblock.

Gemäß einem anderen exemplarischen Ausführungsbeispiel der vorliegenden Erfindung mag ein Verfahren implementiert werden, wobei das Verfahren zum Kommunizieren zwischen Messvorrichtungen auf einer geteilten Netzinfrastruktur oder einem Shared Medium dienen mag. Das Verfahren mag das Empfangen von zumindest einem Telegrammfragment aufweisen. Das Verfahrens mag ferner ein Ziel des zumindest einen Telegrammfragments bestimmen und ein Betriebszustand einer Verarbeitungseinrichtung mag in Abhängigkeit von dem bestimmten Ziel des zumindest einen Telegrammfragments eingestellt werden.

Ferner mag das Verfahren das Erstellen eines Telegrammblocks aus dem zumindest einem Telegrammfragment aufweisen, wobei eine Telegrammgrenze des Telegrammblock bestimmt werden mag. Insbesondere mag ein Anfang bzw. ein Ende des Telegrammblock bestimmt werden. Ferner mag ein Typ des Telegrammblocks bestimmt werden.

Das Bestimmen der Telegrammgrenze und das Bestimmen des Typs des Telegrammblocks mag in einem ersten Betriebszustand erfolgen.

In einem zweiten Betriebszustand mag eine Telegrammgrenze des Telegrammblocks bestimmt werden und eine Sendeeinrichtung mag in dem zweiten Betriebszustand derart angesteuert werden, dass die Sendeeinrichtung ein Telegramm im Wesentlichen unmittelbar im Anschluss an die Telegrammgrenze senden mag.

Das Senden eines Telegramms im Anschluss an eine Telegrammgrenze mag bedeuten, dass zeitlich im Wesentlichen unmittelbar nachdem das geteilte Medium, der Bus oder die Luft frei geworden sein mag, die Sendeeinrichtung mit dem Senden eines Telegramm beginnen kann. Insbesondere mag das Freiwerden der Luft bedeuten, dass ein Funkkanal oder eine Funkübertragungsstrecke freigeworden ist.

Gemäß noch einem anderen exemplarischen Ausführungsbeispiel der vorliegenden Erfindung mag ein Programmelement zum Kommunizieren zwischen Messvorrichtungen auf einer geteilten Netzinfrastruktur geschaffen werden, welches Programmelement, wenn es von einem Prozessor ausgeführt wird, ein Verfahren zum Kommunizieren zwischen Messvorrichtungen auf einer geteilten Netzinfrastruktur steuert.

Gemäß noch einem anderen exemplarischen Ausführungsbeispiel der vorliegenden Erfindung mag ein computerlesbares Speichermedium bereitgestellt werden, in welchem computerlesbaren Speichermedium ein Programm zum Kommunizieren zwischen Messvorrichtungen auf einer geteilten Netzinfrastruktur gespeichert sein mag, welches Programm, wenn es von einem Prozessor ausgeführt wird, das Verfahren zum Kommunizieren zwischen Messvorrichtungen auf einer geteilten Infrastruktur steuert.

Ein computerlesbares Speichermedium mag beispielsweise eine Floppy Disk, eine Harddisk, ein USB (Universal Seriell Bus) Speichermedium, ein RAM (Random Access Memory), ein ROM (Read Only Memory) oder ein EPROM (Erasible Programmable Read Only Memory) sein. Ferner mag ein computerlesbares Speichermedium auch ein Kolnmunikationsnetzwerk sein, beispielsweise das Internet, welches es ermöglicht, einen entsprechenden Programmcode herunterzuladen.

Die zwei Betriebszustände welche die Messvorrichtung einnehmen kann mögen bestimmen, ob ein empfangenes Telegrammfragment und insbesondere ob ein aus zumindest einem Telegrammfragment gebildeter Telegrammblock für die jeweilige Messvorrichtung bestimmt sein mag oder ob der Telegrammblock für eine andere Messvorrichtung bestimmt sein mag. Der Betriebszustand der Messvorrichtung mag folglich darüber entscheiden können, ob die Messvorrichtung einen passiven Status oder einen aktiven Status einnimmt. In anderen Worten mag das bedeuten, dass die Messvorrichtung in einem ersten Betriebszustand, in dem die Messvorrichtung nicht adressiert ist, passiv lediglich den Vorgängen auf dem Bus zuhört bzw. den Telegrammverkehr auf dem Bus aufzeichnet. Dieses Aufzeichnen (Monitoring) oder Beobachten mag es ermöglichen, in einen empfangsbereiten Zustand im Wesentlichen in dem Moment zu gehen, in dem ein erstes vollständiges Nutztelegramm auf dem geteilten Medium oder dem Bus auftreten kann.

Da die Messvorrichtung vollständige Telegramme auswerten mag, mag das Erkennen von Telegrammgrenzen ermöglichen, im Wesentlichen genau in dem Moment empfangsbereit zu sein, wenn die Möglichkeit bestehen mag, dass eine für die Messvorrichtung relevante Information auf dem Bus erscheinen kann. Folglich mag verhinderbar sein, dass Informationen verloren gehen, welche für das Interpretieren eines Telegramms oder eines Telegrammblock von Bedeutung sein könnten. Es mag beispielsweise verhindert werden können, dass das Empfangen eines Anfangs eines Telegramms versäumt wird, wodurch das gesamte Telegramm unbrauchbar werden könnte.

In dem zweiten Betriebszustand mag ein bekanntes Telegrammfragment oder ein bekannter Telegrammblock in der Messvorrichtung erkannt worden sein und das Erkennen der Telegrammgrenze mag es ermöglichen, im Wesentlichen unmittelbar nach dem Empfang eines kompletten Telegramms wiederum ein Telegramm zu senden, beispielsweise ein Antworttelegramm zu senden.

Es mag als eine Idee der Erfindung angesehen werden, durch das Erkennen von Telegrammgrenzen, insbesondere durch das Erkennen von dem Beginn und/oder dem Ende eines Telegramms Zeitpunkte zu bestimmen, in denen über den Bus verfügt werden kann. Durch das unmittelbar Aneinanderreihen von Telegrammen mögen Lücken zwischen den Telegrammen vermieden werden, die beispielsweise durch Wartezeiten entstehen können. Mit dem Erkennen von Telegrammgrenzen mag sich somit ein Bus oder ein geteiltes Medium effektiv nutzen lassen. Insbesondere mag bei Feldbussen das Erkennen der Telegrammgrenzen ein effizientes Nutzen des Busses ermöglichen, da auf einem Fieldbus eine asynchrone Datenübertragung stattfinden mag. Es mag also keine strukturierte Übertragung stattfinden, bei der Telegramme auf Grund einer Rahmenstruktur erkannt werden könnten.

Jede Messvorrichtung, welche als eine Slavevorrichtung oder als Slave konfiguriert sein mag, mag zwischen einem Anfragetelegramm von einem Master und einem Antworttelegramm von einem anderen Slave unterscheiden können. Daher mag während der Kommunikation zwischen der Antwort eines Slaves und einer erneuten Anfrage eines Masters auf einen Timeout oder auf eine Wartezeit verzichtet werden können. Das Verzichten auf eine Wartezeit mag einen hohen Datendurchsatz in einem Kommunikationssystem ermöglichen. Insbesondere mag der hohe Datendurchsatz auf einem Bus ermöglicht werden können.

Dabei mag sich die Kenntnis nutzen lassen, dass auf ein Anfragetelegramm von einem Master mit einer hohen Wahrscheinlichkeit ein Antworttelegramm von dem angesprochenen Slave folgen mag. Folglich mag ein Slave, welcher erkennen mag dass ein Anfragetelegramm nicht für ihn bestimmt ist ebenfalls bestimmen können, dass ein nachfolgendes Antwortsignal auch nicht für den Slave bestimmt ist. Der Slave mag daher in einem passiven Zustand bleiben, auch wenn eine Telegrammgrenze eines Anfragetelegramms erkannt worden ist.

Ein passiver Slave, d. h. ein Slave, welcher nicht zu einer aktuellen Kommunikationsbeziehung zwischen einem Master und Slave gehören mag, mag somit unterbinden, dass der passive Slave nach dem Freiwerden des Busses, d.h. nach dem Übertragen des Anfragetelegramms von einem Master an einen anderen Slave, auf den Bus zugreift, da der passive Slave wissen mag, dass noch ein Antworttelegramm von dem Slave aus der Kommunikationsbeziehung folgen mag.

Eine Voraussetzung für das Empfangen eines Telegramms mag sein, dass ein Teilnehmer, welcher das Telegramm empfangen soll z.B. ein Slave oder ein Master, empfangsbereit ist, d. h. dass sich der Teilnehmer in einem empfangsbereiten Zustand befinden mag. Der Empfang mag mit dem Erhalten eines ersten Bytes erfolgen. Von dem Zeitpunkt des Empfangens des ersten Bytes an mögen im Wesentlichen alle Bytes, welche in der Folge empfangen werden, zu einem Gesamttelegramm gesammelt werden. Das Sammeln der Telegrammfragmente mag mittels eines Speichers im Teilnehmer erfolgen. Nach jedem empfangenen Byte, d. h. nach jedem Empfangen eines Bytes, mag untersucht werden, ob bereits ein komplettes Telegramm, d. h. ob ein Gesamttelegramm oder ein vollständiger Telegrammblock empfangen wurde.

Ein Gesamttelegramm mag sich aus einer Vielzahl von Bytes zusammensetzen, wobei jedes einzelne Byte ein Fragment des Gesamttelegramms darstellen kann. Ein Byte alleine mag beispielsweise einen Befehl zum Steuern eines Slaves darstellen. Beispielsweise mag mit einem Befehl der Beginn einer Messung des Slaves initiiert werden.

Ferner mag jedoch ein Befehl, insbesondere ein umfangreicher Befehl, eine Vielzahl von Bytes aufweisen. Beispielsweise mag eine Nachricht oder ein Befehl zum Parametrieren des Slaves eine Vielzahl von Telegrammfragmenten aufweisen.

Das vollständige Empfangen eines Gesamttelegramms kann der Slave ermitteln, indem das Format des zusammengesetzten Gesamttelegramms mit einem gespeicherten Muster eines Gesamttelegramms verglichen wird. So mag das Gesamttelegramm beispielsweise einen Operation Code aufweisen, welcher das auszuführende Kommando referenziert. Ein Vergleichen in einer Liste mit diesem Operation Code oder OP Code bzw. das Vorhandensein eines OP Codes an den vorgegebenen Stellen mag das Erkennen des Gesamttelegramms und insbesondere der Grenzen des Gesamttelegramms ermöglichen.

Ist ein Gesamttelegramm erkannt worden, so mag das Telegramm bearbeitet werden. Bei dem Bearbeiten mag festgestellt werden, dass das Gesamitelegramm noch nicht vollständig ist, wobei es dann notwendig sein mag, noch weitere Bytes zu sammeln.

Eine Empfangsroutine mag einen Timeout aufweisen, welcher einer Wartezeit entsprechen mag. Dieser Timeout mag beispielsweise ein Rückwärtszähler von einem vorgebbaren Startwert sein, welcher eine Mitteilung macht, wenn er abgelaufen ist. Beispielsweise mag ein Timeout ein Countdown Counter sein. Der Timeout mag beispielsweise ablaufen, wenn für eine bestimmte Zeit kein weiteres Byte für ein unvollständiges Gesamttelegramm empfangen worden ist. Wenn dieser Timeout abläuft, mögen alle bereits empfangenen Bytes und insbesondere das unvollständige Gesamttclegramm verworfen werden und das Empfangen eines Gesamttelegramms mag erneut beginnen.

Gemäß einem Aspekt der vorliegenden Erfindung mag jeder Slave, d. h. jede Messvorrichtung, welche als Slave konfiguriert sein mag, auch die Antwort eines anderen Slaves empfangen. In einer Busnetzwerkinfrastruktur oder einer Funkinfrastruktur, bei der eine Vielzahl von Messvorrichtungen auf ein gemeinsames Medium oder ein geteiltes Medium zugreifen, mag für eine Messvorrichtung die Kommunikation von anderen Messvorrichtungen untereinander sichtbar sein. D. h. die Kommunikation, der Austausch von Telegrammen, mag von einer Messvorrichtung überwacht oder beobachtet werden. Werden einzelne Telegramme, welche über das geteilte Medium geschickt werden, interpretiert und verfolgt, ohne jedoch aktiv an der Kommunikation teilzunehmen, mag es einem Slave ermöglicht werden, dass der Slave nach dem Empfangen einer kompletten Antwort eines anderen Slaves sofort wieder empfangsbereit sein mag oder in einem empfangsbereiten Zustand wechseln mag.

Ebenfalls mag ein Master nach dem Erhalten der Antwort eines Slaves sofort eine weitere Anfrage oder ein weiteres Anfragetelegramm versenden können. Der Master mag somit auf das Einhalten einer Wartezeit verzichten können, im Wesentlichen ohne dass es zu einer Kollision von Datenpaketen kommen mag. Durch das Erkennen der Telegrammgrenzen mag sich ein hoher Datendurchsatz erreichen lassen. Es mag vermieden werden, dass bei einer Kommunikation eines Masters mit mehreren Slaves ein an dieser Komanunikationsbezichuüg unbeteiligter Slave die Antwort eines der anderen Slaves als Beginn eines Anfragetelegramms für den Slave interpretiert. Mittels des Erkennens der Telegrammgrenzen mag auf eine Timeoutsteuerung für das Erkennen einer solchen Fehlinterpretation verzichtet werden können.

Ein Timer oder eine Timeoutsteuerung könnte nötig sein, damit jeder Kommunikationsteilnehmer, d. h. jeder an ein geteiltes Medium angeschlossene Master oder Slave, vor dem Versenden einer Anfrage oder vor dem Versenden einer Antwort mindestens eine Timeoutzeit des Systems als Wartezeit einhält. Mit dem Erkennen der Telegrammgrenzen mag sich vermeiden lassen, dass mittels einer Timeoutsteuerung im Wesentlichen sichergestellt werden mag, dass alle beteiligten Kommunikationsteilnehmer zum Start eines Telegramms im Wesentlichen sicher empfangsbereit sind. Ein solcher Timeout oder eine Timeoutsteuerung mag sich mit dem Erkennen der Telegrammgrenzen vermeiden lassen, da Wartezeiten verringert werden mögen.

In anderen Worten mag es eine Idee der vorliegenden Erfindung sein, in jeder an einem Bussystem angeschlossenen Messvorrichtung zu erkennen, ob ein auf dem Bus empfangenes Telegrammfragment für die jeweilige Messvorrichtung bestimmt ist. Wenn das Telegrammfragment für eine Messvorrichtung bestimmt sein mag, mag die Messvorrichtung eine aktive Rolle in einer Kommunikationsbeziehung hinnehmen, d. h. die Messvorrichtung mag sich an der Kommunikation beteiligen, indem sie Anfrage- und/oder Antworctelegramme versendet und empfangene Telegramme interpretiert und verarbeitet. Diese Aktivrolle mag einen zweiten Betriebszustand darstellen.

Ferner mag die Messvorrichtung einen ersten Betriebszustand oder einen passiven Betriebszustand einnehmen, wenn die Messvorrichtung erkennt, dass sie nicht an einer Kommunikation auf dem Bus beteiligt ist. Trotzdem mag die Messvorrichtung in dem passiven Zustand den Verkehr auf dem Bus verfolgen, um möglichst unmittelbar nach Freiwerden des Busses ggf. selbst auf den Bus zugreifen zu können.

Der Bus mag insbesondere ein Feldgerätebus sein.

Gemäß einem weiteren exemplarischen Ausführungsbeispiel der vorliegenden Erfindung mag die Empfangseinrichtung eingerichtet sein das Ziel mittels einer Adresse zu ermitteln.

Das Ziel für ein Telegrammfragment mag über eine Adresse, beispielsweise eine Zieladresse bestimmt sein, welche in dem Telegrammfragment gespeichert sein mag. Die Zieladresse mag eine Messvorrichtung sein, wobei die Messvorrichtung durch Vergleichen ihrer eigenen Adresse mit der Zieladresse des Telegrammfragments feststellen mag, ob ein Telegrammfragment für die entsprechende Messvorrichiung bestimmt sein mag. Mittels der Zieladresse mag somit der erste Betriebszustand oder der zweite Betriebszustand in der Messvorrichtung einstellbar sein.

Gemäß einem anderen exemplarischen Ausführungsbeispiel der vorliegenden Erfindung mag die Verarbeitungseinrichtung der Messvorrichtung ferner eingerichtet sein in dem ersten Betriebszustand, beispielsweise dem passiven Betriebszustand, die Telegrammgrenze eines Anfragetelegrammblocks und die Telegrammgrenze eines Antworttelegrammblocks zu bestimmen.

Wenn die Messvorrichtung erkannt haben mag, dass auf dem Bus ein nicht für die Messvorrichtung bestimmtes Anfragepaket ausgetauscht worden ist, mag die Messvorrichtung erkennen können, dass in der Folge ein Antworttelegramm folgen mag. Dieses Antworttelegramm mag ebenfalls nicht für die Messvorrichtung bestimmt sein. Folglich mag die Messvorrichtung erst nach dem Erkennen eines Anfragetelegrammblocks und dem Erkennen eines Antworltelegrammblocks in einen empfangsbereiten Zustand gehen.

Somit mag vermieden werden, dass ein Antworttelegramm einer anderen Messvorrichtung, als Beginn eines Anfragetelegramms von der Messvorrichtung interpretiert wird. Das Erkennen der Telegrammgrenzen sowohl des Anfragetelegrammblocks und des Antworttelegrammblocks mag es ermöglichen, im Wesentlichen unmittelbar nach dem Empfang des Antworttelegrammblocks der anderen Messvorrichtung in einen empfangsbereiten Zustand zu wechseln.

Gemäß noch einem anderen exemplarischen Ausführungsbeispiel der vorliegenden Erfindung mag die Empfangseinrichtung und/oder die Sendeeinrichtung in dem ersten Betriebszustand, derart, eingerichtet sein, dass sie unmittelbar nach dem Erkennen der Telegrammgrenzen in einen empfangsbereiten und/oder einen sendebereiten Betriebszustand wechseln mag.

Aus dem Erkennen eines Antworttelegramms mag die Messvorrichtung auf das Freiwerden des Busses schließen können. Nach dem Erkennen des Antworttelegramms und insbesondere nach dem Erkennen der Grenzen des Antworttelegrammblocks einer anderen Messvorrichtung, also beispielsweise nach dem Erkennen des Endes des Antworltelegrammblocks, mag die Messvorrichtung sowohl für sie selbst bestimmte Nachrichten empfangen können als auch selbst Nachrichten auf den Bus schicken können.

Gemäß noch einem anderen exemplarischen Ausführungsbeispiel der vorliegenden Erfindung mag die Empfangseinrichtung und/oder die Sendeeinrichtung in dem zweiten Betriebszustand derart eingerichtet sein im Wesentlichen unmittelbar nach dem Senden des Telegramms in einen empfangsbereiten und/oder sendebereiten Betriebszustand, zu wechseln.

Nachdem eine Messvorrichtung auf ein für die Messvorrichtung bestimmtes Anfragetelegramm oder einen entsprechenden Anfragetelegrammblock einen Antworttelegrammblock gesendet haben mag, mag es der Messvorrichtung möglich sein, wiederum Telegramme zu empfangen oder zu senden.

Gemäß noch einem anderen Ausführungsbeispiel der vorliegenden Erfindung mag ein Telegrammfragment die Länge von einem Byte aufweisen.

Ferner mag die Länge eines Telegrammfragments die Länge von einem Wort oder von einem Doppelwort aufweisen. Bei einem 2k-Bit System mag ein Wort 2k Bit aufweisen und ein Doppelwort 2 · 2k Bit aufweisen. K mag die Registerlänge sein. Ein Byte mag acht Bit aufweisen.

Ein Byte mag die geringste Länge eines verwendeten Befehls gemäß einem Feldbusstandard sein. Ein Befehl oder ein Kommando mag aus mehreren Byte zusammengesetzt sein.

Gemäß noch einem anderen Ausführungsbeispiel der vorliegenden Erfindung mag die Messvorrichtung zumindest eine Messvorrichtung ausgewählt aus den Messvorrichtungen bestehend aus einem Feldgerät, einem Aktor, einem Sensor, einem Auswertgerät, einem Gateway, einer Remote 10, einem Steuergerät, einem Füllstandmessgerät, einem Durchflussmessgerät und einem Druckmessgerät sein.

Gemäß noch einem anderen exemplarischen Ausführungsbeispiel der vorliegenden Erfindung mag die Messvorrichtung zum Anschließen an einen Bus und/oder an eine Funkübertragungsstrecke eingerichtet sein.

Beispielsweise mag die Messvorrichtung eine Antenne oder eine MAU (Medium Access Unit) aufweisen, mit welcher es möglich ist, sowohl Signale vom Bus zu empfangen als auch Signale auf den Bus zu senden.

Gemäß noch einem anderen exemplarischen Ausführungsbeispiel der vorliegenden Erfindung mag die Messvorrichtung eingerichtet sein Fehler mittels des Ablaufens von Timern oder Timeouts zu erkennen.

Mittels dem Vorsehen von Timern mag es möglich sein, sog. Deadlock Zustände zu vermeiden, in denen sich die Messvorrichtung "aufgehängt" haben mag. Das mag bedeuten, dass die Messvorrichtung einen Zustand eingenommen haben mag, in welchem das Verfahren zum Kommunizieren zwischen Messvorrichtungen stehen geblieben ist. Beispielsweise mag ein Reset durchgeführt werden müssen, um das Verfahren wieder zum Laufen zu bringen.

Es soll angemerkt werden, dass unterschiedliche Aspekte bzw. Ausführungsbeispiele der Erfindung mit Bezug auf unterschiedliche Gegenstände beschrieben wurden. Insbesondere wurden einige Ausführungsbeispiele mit Bezug auf Vorrichtungsansprüche beschrieben, wohingegen andere Ausführungsbeispiele in Bezug auf Verfahrensansprüche beschrieben wurden. Ein Fachmann kann jedoch der vorangehenden Beschreibung und der folgenden Beschreibung entnehmen, dass, außer es wird anders beschrieben, zusätzlich zu jeder Kombination von Merkmalen, die zu einer Kategorie von Gegenständen gehören, auch jede Kombination zwischen Merkmalen gehört, die sich auf unterschiedliche Kategorien von Gegenständen bezieht. Insbesondere sollen Kombinationen zwischen Merkmalen von Vorrichtungsansprüchen und Merkmalen von Verfahrensansprüchen offenbart sein.

Im Folgenden werden weitere exemplarische Ausführungsbeispiele der vorliegenden Erfindung mit Verweis auf die Figuren beschrieben.
Fig. 1 zeigt eine Messvorrichtung gemäß einem exemplarischen Ausführungsbeispiel der vorliegenden Erfindung.
Fig. 2 zeigt ein Nachrichtentlussdiagramm zur Steuerung eines Verfahrens zum Kommunizieren von Messvorrichtungen auf einer geteilten Netzinfrastruktur gemäß einem exemplarischen Ausführungsbeispiel der vorliegenden Erfindung.

Die Darstellungen in den Figuren sind aschematisch und nicht maßstäblich. In der folgenden Beschreibung der Figuren werden die gleichen Bezugsziffern für gleiche oder sich entsprechende Elemente verwendet.

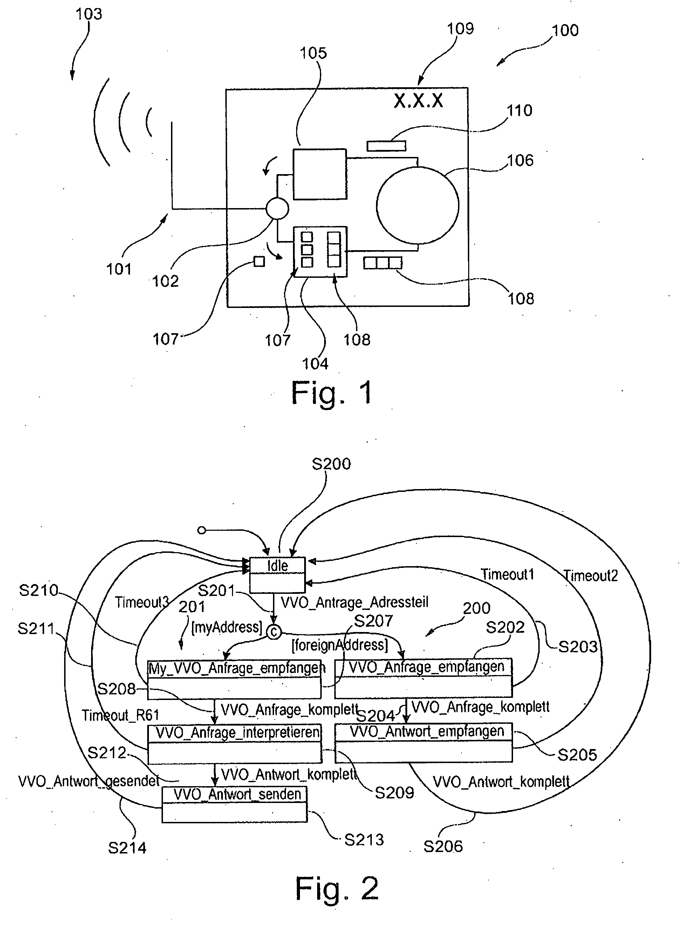

Die Fig. 1 zeigt ein Blockdiagramm einer Messvorrichtung 100 gemäß einem exemplarischen Ausführungsbeispiel der vorliegenden Erfindung. Hierbei kann es sich um ein Feldgerät, 100, insbesondere um einen Slave 100 oder einen Master 100 handeln. Ein Master 100 ist ein als Master konfiguriertes Feldgerät, 100, beispielsweise ein Auswertgerät 100, während ein Slave 100, ein als Slave konfigurierte Feldgerät ist, beispielsweise ein Sensor 100.

Der Master 100 kann durch das Senden von Anfragetelegrammen, Abfragetelegrammen, Befehltelegrammen oder Kommandotelegrammen einen oder eine Vielzahl von Slaves 100 steuern, ansprechen oder abfragen. Sowohl der Master 100 als auch ein Slave 100 hat einen Anschluss 101, mit dem er an ein geteiltes Medium angeschlossen werden kann. In Fig. 1 ist das geteilte Medium die Luft, auf die mittels einer Antenne 101 zugegriffen werden kann.

Im Falle eines physikalischen oder drahtgebunden Buses kann der Anschluss 101 oder das Interface 101 einem Feldbus entsprechender Anschluss sein. Ein Feldbus kann beispielsweise ein HART ® Bus, ein Profibus oder ein Fieldbus Foundation™ Bus sein. Der Anschluss 101 kann sowohl dem Empfangen als auch dem Senden von Signalen dienen. Die Signale können wiederum die Telegrammfragmente oder gesamte Telegramme entfalten, wobei die Telegramme wiederum Messwerte, Befehle oder andere für die Steuerung eines Messproresses verantwortliche Werte enthalten.

Um das Senden und Empfangen über eine gemeinsame Netzinfrastruktur zu ermöglichen, ist die Weiche 102 vorgesehen, welche es ermöglicht, Telegramme von dem Bus 103 kommend an die Empfangseinrichtung 104 weiterzuleiten. Andererseits ermöglicht es die Weiche 102 Signale bzw. Telegramme, welche von der Sendeeinrichtung 105 stammen, auf den Bus 103 weite:rzulciten. Sowohl die Empfangseinrichtung 104 als auch die Sendeeinrichtung 105 sind mit der Weiche 102 verbunden.

Außerdem sind die Empfangseinrichtung 104 und die Sendeeinrichtung 105 mit der Verarbeitungseinrichtung 106 verbunden. Die Verarbeitungseinrichtung 106 dient dazu, Telegrammgrenzen zu erkennen. Dazu erhält die Verarbeitungseinrichtung einen zusammengesetzten Telegrammblock von der Empfangseinrichtung 104. Die Verarbeitungseinrichtung 106 mag einer höheren logischen Schicht angehören als die Empfangseinrichtung 104 oder die Sendeeinrichtung 105. Ein aus mehreren Telegrammfragmenten zusammengesetzter Telegrammblock mag somit von einer unteren logischen Schicht an eine höhere logische Schicht weitergereicht werden.

Die Empfangseinrichtung 104 empfängt von dem Bus 103 über den Anschluss 101 oder über das Interface 101 und über die Weiche 102 die Telegrammfragmente 107 und setzt daraus ein Gesamttelegramm 108 zusammen, welches Gesamttelegramm 108 die Empfangseinrichtung 104 zur Weiterverarbeitung an die Verarbeitungseinrichtung 106 weitergibt. Die Empfangseinrichtung 104 erkennt auch das Ziel eines Telegrammfragments 107, wobei das Telegrammfragment 107 beispielsweise eine Zieladresse aufweist. Die Empfangseinrichtung 104 vergleicht die Zieladresse eines Telegrammfragments 107 beispielsweise mit der in der Messvorrichtung 100 konfigurierten Adresse 109.

Stimmt die Zieladresse eines Telegrammfragments 107 mit der Feldgeräteadresse 109 oder der Adresse 109 der Messvorrichtung überein, wechselt die Verarbeitungseinrichtung 106 und insbesondere die Messvorrichtung 100 in den aktiven Betriebszustand, d. h. in den zweiten Betriebszustand. Die Verarbeitungseinrichtung 109 interpretiert die Telegrammblöcke 108 oder den Telegrammblocks 108, wenn sie sich in diesem zweiten Betriebszustand befindet, und verschickt über die Sendeeinrichtung 105, die Weiche 102 und das Interface 101 ein Antwortpaket 110.

Stimmt die Zieladresse eines Telegrammfragments 107 nicht mit der Messvorrichtungsadresse 109 überein, wechselt die Verarbeitungseinrichtung 106, insbesondere die Messvorrichtung 100 in einen ersten Betriebszustand, d. h. in den passiven Betriebszustand. In dem passiven Betriebszustand verfolgt die Messvorrichtung 100 die Telegramme 108 und bestimmt die Telegrammgrenzen, beispielsweise den Anfang und/oder das Ende des Telegramms 108 in der Absicht, festzustellen, wann der Bus 103 frei ist.

Das Verfahren zum Kommunizieren zwischen Messvorrichtungen auf einer geteilten Netzinfrastruktur gemäß einem exemplarischen Ausführungsbeispiel der vorliegenden Erfindung ist in dem Nachrichtenilussdiagramm der Fig. 2 dargestellt. In einem ersten Zustand S200, dem Idle-Zustand, ist die Messvorrichtung 100 empfangsbereit und/oder sendebereit.

Es folgt in Schritt S201 das Interpretieren des Ziels eines Telegrammfragments, insbesondere eines Telegrammblocks. Dieser Schritt ist in Fig. 2 mit VVO_Anfrage_Adressteil bezeichnet. VVO mag VEGA^{®} Visual Operating bedeuten.

Nach der Abfrage in Schritt S201 wird entschieden, ob sich das System oder die Messvorrichtung 100 in dem ersten Betriebszustand 200 befindet oder ob es sich in dem zweiten Betriebszustand 201 befindet.

In den ersten Betriebszustand 200 gelangt die Messvorrichtung 100 nach der Abfrage in Schritt S201, wenn festgestellt wird, dass das Telegrammfragment zu einer fremden Kommunikationsbeziehung gehört und somit eine andere Zieladresse als die Adresse 109 der Messvorrichtung aufweist. Dieser Schritt ist in Fig. 2 mit der Bezeichnung [foreignAddress] bezeichnet.

Bei dem Übereinstimmen der Zieladresse mit der Messvorrichtungsadresse 109 gelangt das System in den zweiten Zustand 201, was mit der Bezeichnung [myAddress] gekennzeichnet ist.

Im Folgenden soll der erste Betriebszustand 200, d. h. ein passiver Betriebszustand beschrieben werden.

Nach dem Feststellen, dass die Messvorrichtungsadresse 109 nicht mit der Zieladresse eines Teiegrammfragments 107 übereinstimmt, gelangt das Verfahren in den Zustand S202, VVO_Anfrage_empfangen. In diesem Zustand wird festgestellt, dass ein Anfragepaket vollständig auf dem Bus empfangen worden ist, jedoch dieses Anfragepaket, Anfragetelegramm oder die Anfragenachricht nicht zu der Messvorrichtung 100 gehört. Allerdings kann die Messvorrichtung 100 auch das fremde Gesamttelegramm, d. h. das zu der fremden Kommunikationsbeziehung gehörige Gesamttelegramm, interpretieren und insbesondere die Telegrammgrenzen bestimmten. Somit lässt sich der Beginn und das Ende eines Anfragepakets ermitteln.

Um zu verhindert, dass es zu einem Fehlerszenario kommt, ist in Schritt S203 ein erster Timer Timeout I vorgesehen, der abläuft wenn nicht innerhalb einer vorgebbaren Zeit ein vollständiges Telegramm ermittelt werden konnte. Mit Ablauf des Timer Timeout 1 gelangt das System wieder in den Zustand S200, d. h. in empfangsbereiten Zustand. Ein noch nicht vollständig empfangenes Teilpaket wird verworfen.

Nach dem Feststellen der Anfrage wird in Schritt S204, VVO_Anfrage_komplett festgestellt, ob es sich um ein komplettes Anfragepaket handelt und wenn es sich um ein komplettes Anfragepaket handelt, wird in den Zustand S205 gesprungen, in dem festgestellt wird, ob ein zugehöriges Antworttelegramm auf dem Bus erkannt werden kann.

Der Timer Timeout 2 läuft ab, wenn es sich im Zustand S205 um ein nicht vollständig empfangenes Antwortpaket handelt. Der Timout 2 oder der Timer2 kann genutzt werden, um den Slave bei einem nicht vollständig empfangenen Antworttelegramm des adressierten Slaves wieder in den empfangsbereiten Zustand S200 zu versetzen.

Das Antwortielegramm welches in Schritt S205 behandelt wird gehört zu einer fremden Messvorrichtung. Wenn das zu der Anfrage aus Schritt S202 zugehörige Antworttelegramm korrekt empfangen worden ist, wird sowohl das empfangene Anfragetelegramm als auch das empfangene Antworttelegramm im Schritt S206 verworfen und im Wesentlichen unmittelbar nach dem Erkennen des Antworttelegramms und insbesondere der Telegrammgrenzen, d. h. des Telegrammendes in den Idle-Zustand S200 gesprungen (VVO_Antwort_komplett).

Somit ist die Messvorrichtung 100 in der Lage zu bestimmen, wann die Messvorrichtung 100 wieder in einen empfangsbereiten oder sendebereiten Zustand S200 wechseln soll, obwohl sie 100 nicht an der Kommunikationsbeziehung teilnimmt. Durch das sequentielle Ablaufen der Schritte S202 und S205, d. h. des Abwartens des Empfangens eines Antworttelegramms auf ein Anfragetelegramm mag vermieden werden, dass ein Teil des Antworttelegramms als Anfragetelegramm interpretiert wird. Außerdem mag vermieden werden, dass-außer es liegt ein Fehler vor-frühzeitig in den Idle-Zustand S200 gesprungen wird.

Im Folgenden wird der zweite Betriebszustand S201 oder der aktive Betriebszustand, beschrieben.

Nach dem Erkennen, dass es sich bei der Zieladresse des Telegrammfragments 107 um die Messvorrichtungsadresse 109, die eigenen Adresse 109 ([myAddress]) handelt wird von dem Schritt S201 in den Zustand S207 gesprungen. Dieser Zustand S207 ist mit My_VVO_Anfrage_empfangen bezeichnet.

In dem Zustand S207 wird ein Gesamttelegramm aus einzelnen Telegrammfragmenten 107 zusammengestellt, bis ein Anfragetelegramm komplett ist. D. h. bei Erkennen der Grenzen eines Anfragetelegramms wird im Schritt S208 in den Zustand VVO_Anfrage_interprelieren, S 209, gewechselt. Der Übergang S208 ist mit VVO_Anfrage_komplett bezeichnet.

In dem Zustand S207 läuft der Timer Timeout 3 ab, wenn nicht genügend Bytes oder ausreichend viele Telegrammfragmente innerhalb einer vorgebbaren Zeit empfangen worden sind, um ein komplettes Anfragepaket im Schritt S207 zusammenzustellen. Nach dem Ablaufen des Timeout 3 im Schritt S210 wird zurück in den Idee-Zustand S200 gesprungen.

Ein komplettes Anfragepaket, d. h. ein Anfragetelegramm bei dem die Telegrammgrenzen erkannt werden konnten, wird im Schritt S209 interpretiert, VVO_Anfrage_interpretieren. Beim Interpretieren wird beispielsweise festgestellt, ob ein gültiger OP-Code vorhanden ist und welche Aktionen verlangt werden.

Der Timeout R61 ist im Schritt S211 vorgesehen um zu verhindern, dass der Master eine Antwort sendet, wenn die Zeit in der ein Master eine Antwort senden kann abgelaufen ist. Durch solch ein Senden könnte es zu Überschneidungen von Telegrammen auf dem Bus kommen.

Nachdem der Master eine Anfrage zu einem Slave gesendet hat, wartet der Master für eine definierte Zeit auf die Antwort. Ist diese Zeit abgelaufen, wird der Master die nächst Anfrage senden und ist daher nicht mehr empfangsbereit.

Für den zugehörigen Slave bedeutet dies, dass für das Senden der Antwort nur ein definiertes Zeitfenster zur Verfugung steht. Dieses Zeitfenster wird mittels Timeout_R61 festgelegt. Timout_61 verhindert somit, dass der Slave, falls die benötigte Zeit zur Generierung der Antwort dieses Zeitfenster übersteigt, die Antwort nicht mehr versendet und verwirft.

Wenn die Anfrage, welche von einem Master kommt, in Schritt S209 interpretiert worden ist und ein entsprechendes Antworttelegramm erstellt worden ist, erfolgt im Schritt S212 die Übergabe eines kompletten Antwortsignals an die Sendeeinrichtung 105, was mit VVO_Antwort_Komplett in Fig. 2 bezeichnet ist. Darauf gelangt die Messvorrichtung 100, die im Fall der Fig. 2 ein Slave 100 ist, in den Zustand S213, in dem mittels der Sendeeinrichtung 105 ein Antwortsignal auf das empfangene Anfragetelegramm gesendet wird.

Durch das Erkennen der Grenzen des Anfragetelegramms ist es möglich, das Antworttelegramm im Wesentlichen unmittelbar nach dem Anfragetelegramm zu senden, um möglichst den freien Bus zu nutzen, VVO_Antwort_senden S213.

Im Schritt S214, VVO_Annwort_gesendet, wird unmittelbar nach dem Aussenden des Antworttelegramms, d. h. nach dem Erkennen der Telegrammgrenze des Antworttelegramms, insbesondere des Erkennens des Endes des Antworttelegramms, in den empfangsbereiten bzw. sendebereiten Zustand S200 gesprungen, um ein schnelles Antworten auf eine weitere Anfrage zu ermöglichen und den gemeinsamen Bus auszunutzen.

Folglich kann ein Slave sofort nach dem Antworten wieder in einen Empfangmodus gehen und ein Master kann nach dem Senden unmittelbar auf eine Antwort warten. Jeder Slave 100 kann somit zwischen einem Anfragetelegramm vom Master und dem Antworttelegramm eines anderen Slaves unterscheiden und daher kann während der gesamten Kommunikation zwischen der Antwort eines anderen Slaves S205 und einer erneuten Anfrage des Masters S200 auf einen Timeout in dem Master zum Erkennen eines freien Busses 103 verzichtet werden. Dadurch kann ein hoher Datendurchsatz erreicht werden.

Ergänzend ist darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Messvorrichtung (100), aufweisend:
eine Empfangseinrichtung (104);
eine Verarbeitungseinrichtung (106);
eine Sendeeinrichtung (105);
wobei die Empfangseinrichtung (104) zum Empfangen von zumindest einem Telegrammfragment (107) eingerichtet ist;
wobei die Empfangseinrichtung (104) eingerichtet ist, ein Ziel des zumindest eines Telegrammfragments (107) zu bestimmen und in Abhängigkeit von dem Ziel des zumindest einem Telegrammfragments (107) einen Betriebszustand der Verarbeitungseinrichtung (106) einzustellen; und
wobei die Empfangseinrichtung (104) eingerichtet ist aus dem zumindest einen Telegrammfragment (107) einen Telegrammblock (108) zu erstellen;
wobei die Verarbeitungseinrichtung (106) in einem ersten Betriebszustand (200) eingerichtet ist eine Telegrammgrenze des Telegrammblocks (108) und einen Typ des Telegrammblocks (108) zu bestimmen;
wobei die Verarbeitungseinrichtung (106) in einem zweiten Betriebszustand (201) eingerichtet ist eine Telegrammgrenze des Telegrammblocks (108) zu bestimmen und die Sendeeinrichtung (105) derart anzusteuern, dass die Sendeeinrichtung (105) ein Telegramm im Anschluss an die Telegrammgrenze sendet.

2. Messvorrichtung (100) nach Anspruch 1, wobei die Empfangseinrichtung (104) eingerichtet ist, das Ziel mittels einer Adresse (109) zu ermitteln.

3. Messvorrichtung (100) nach Anspruch 1 oder 2, wobei die Verarbeitungseinrichtung (106) ferner eingerichtet ist, in dem ersten Betriebszustand (200) die Telegrammgrenze eines Anfrage-Telegrammblocks und eines AntwortTelegrammblocks zu bestimmen.

4. Messvorrichtung (100) nach einem der Ansprüche 1 bis 3, wobei die Empfangseinrichtung (104) und/oder die Sendeeinrichtung (105) in dem ersten Betriebszustand (200) eingerichtet sind, unmittelbar nach dem Erkennen der Telegrammgrenze in einen empfangsbereiten und /oder sendebereiten Betriebszustand zu wechseln.

5. Messvorrichtung (100) nach einem der Ansprüche 1 bis 3, wobei die Empfangseinrichtung (104) und/oder die Sendeeinrichtung (105) in dem zweiten Betriebszustand (201) eingerichtet sind, unmittelbar nach dem Senden des Telegramms in einen empfangsbereiten und /oder sendebereiten Betriebszustand zu wechseln.

6. Messvorrichtung (100) nach einem der Ansprüche 1 bis 5, wobei das Telegrammfragment (107) die Länge von einem Byte aufweist.

7. Messvorrichtung (100) nach einem der Ansprüche 1 bis 6, wobei die Messvorrichtung (100) zumindest eine Messvorrichtung (100) ausgewählt ist aus der Gruppe der Messvorrichtungen bestehend aus einem Feldgerät, einem Aktor, einem Sensor, einem Auswertgerät, einem Gateway, einer Remote I/O, einem Steuergerät, einem Füllstandmessgerät, einem Durchflussmessgerät und einem Druckmessgerät.

8. Messvorrichtung (100) nach einem der Ansprüche 1 bis 7, wobei die Messvorrichtung (100) zum Anschließen an einen Bus (103) und/oder an eine Funkübertragungsstrecke (103) eingerichtet ist.

9. Messvorrichtung (100) nach einem der Ansprüche 1 bis 8, wobei die Messvorrichtung (100) eingerichtet ist, Fehler mittels des Ablaufens von Timern zu erkennen.

10. Messvorrichtung (100) nach einem der Ansprüche 1 bis 9, wobei das zumindest eine Telegrammfragment (107) und/oder der Telegrammblock (108) konform zu zumindest einem der Busstandards ist, ausgewählt aus der Gruppe der Busstandards bestehend aus dem HART® Busstandard, Profibus Standard und einem Fieldbus Foundation™ Standard.

11. Verfahren zum Kommunizieren zwischen Messvorrichtungen auf einer geteilten Netzinfrastruktur, aufweisend:
Empfangen von zumindest einem Telegrammfragment;
Bestimmen eines Ziels des zumindest einen Telegrammfragments und Einstellen eines Betriebszustandes einer Verarbeitungseinrichtung in Abhängigkeit von dem Ziel des zumindest einem Telegrammfragments; und
Erstellen eines Telegrammblock aus dem zumindest einen Telegrammfragment;
Bestimmen einer Telegrammgrenze des Telegrammblocks und eines Typs des Telegrammblocks in einem ersten Betriebszustand;
Bestimmen einer Telegrammgrenze des Telegrammblocks und Ansteuern einer Sendeeinrichtung in einem zweiten Betriebszustand derart, dass die Sendeeinrichtung ein Telegramm im Anschluss an die Telegrammgrenze sendet.

12. Programmelement zum Kommunizieren zwischen Messvorrichtungen auf einer geteilten Netzinfrastruktur, welches Programmelement wenn es von einem Prozessor ausgeführt wird, folgendes Verfahren steuert:
Empfangen von zumindest einem Telegrammfragment;
Bestimmen eines Ziels des zumindest einen Telegrammfragments und Einstellen eines Betriebszustandes einer Verarbeitungseinrichtung in Abhängigkeit von dem Ziel des zumindest einem Telegrammfragments; und
Erstellen eines Telegrammblocks aus dem zumindest einen Telegrammfragment;
Bestimmen einer Telegrammgrenze des Telegrammblocks und eines Typs des Telegrammblocks in einem ersten Betriebszustand;
Bestimmen einer Telegrammgrenze des Telegrammblocks und Ansteuern einer Sendeeinrichtung in einem zweiten Betriebszustand derart, dass die Sendeeinrichtung ein Telegramm im Anschluss an die Telegrammgrenze sendet.

13. Computerlesbares Speichermedium in dem ein Programm zum Kommunizieren zwischen Messvorrichtungen auf einer geteilten Netzinfrastruktur gespeichert ist, welches Programm, wenn es von einem Prozessor ausgeführt wird, folgendes Verfahren steuert:
Empfangen von zumindest einem Telegrammfragment;
Bestimmen eines Ziels des zumindest einen Telegrammfragments und Einstellen eines Betriebszustandes einer Verarbeitungseinrichtung in Abhängigkeit von dem Ziel des zumindest einem Telegrammfragments; und
Erstellen eines Telegrammblocks aus dem zumindest einen Telegrammfragment;
Bestimmen einer Telegrammgrenze des Telegrammblocks und eines Typs des Telegrammblocks in einem ersten Betriebszustand;
Bestimmen einer Telegrammgrenze des Telegrammblocks und Ansteuern einer Sendeeinrichtung in einem zweiten Betriebszustand derart, dass die Sendeeinrichtung ein Telegramm im Anschluss an die Telegrammgrenze sendet.

## Claims

1. A measuring apparatus (100) comprising:
a receiving device (104);
a processing device (106);
a sending device (105);
wherein the receiving device (104) is adapted for receiving at least one telegram fragment (107);
wherein the receiving device (104) is adapted to determine a destination of the at least one telegram fragment (107) and depending on the destination of the at least one telegram fragment (107) to set an operating state of the processing device (106); and
wherein the receiving device (104) is adapted, from the at least one telegram fragment (107), to prepare a telegram block (108);
wherein the processing device (106) is adapted in a first operating state (200) to determine a telegram boundary of the telegram block (108), and to determine a type of the telegram block (108);
wherein the processing device (106) is adapted, in a second operating state (201) to determine a telegram boundary of the telegram block (108), and to drive the sending device (105) such that the sending device (105) sends a telegram subsequent to the telegram boundary.

2. The measuring apparatus (100) according to claim 1, wherein the receiving device (104) is adapted to determine the destination by an address (109).

3. The measuring apparatus (100) according to claim 1 or 2, wherein the processing device (106) is further adapted, in the first operating state (200), to determine the telegram boundary of a request telegram block and the telegram boundary of a response telegram block.

4. The measuring apparatus (100) according to one of claims 1 to 3, wherein the receiving device (104) and/or the sending device (105) in the first operating state (200) is/are adapted to KK:WS:ag change to a ready-to-receive operating state and/or a ready-to-send operating state immediately upon recognizing the telegram boundary.

5. The measuring apparatus (100) according to one of claims 1 to 3, wherein the receiving device (104) and/or the sending device (105) in the second operating state (201) is/are adapted to change to a ready-to-receive operating state and/or a ready-to-send operating state immediately upon sending the telegram.

6. The measuring apparatus (100) according to one of claims 1 to 5, wherein the telegram fragment (107) has the length of one byte.

7. The measuring apparatus (100) according to one of claims 1 to 6, wherein the measuring apparatus (100) is at least one measuring apparatus selected from the group of measuring apparatuses consisting of a field device, an actuator, a sensor, an evaluation device, a gateway, a remote I/O, a control device, a fill-level measuring device, a flow-through measuring device and a pressure measuring device.

8. The measuring apparatus (100) according to one of claims 1 to 7, wherein the measuring apparatus (100) is adapted for connecting to a bus (103) and/or to a radio transmission path (103).

9. The measuring apparatus (100) according to one of claims 1 to 8, wherein the measuring apparatus (100) is adapted to recognize errors by the expiring of timers.

10. The measuring apparatus (100) according to one of claims 1 to 9, wherein the at least one telegram fragment (107) and/or the telegram block (108) conforms to at least one of the bus standards selected from the group of bus standards consisting of the HART® bus standard, Profibus standard and a Fieldbus Foundation™ standard.

11. A method for communicating between measuring apparatuses on a shared network infrastructure, comprising:
receiving at least one telegram fragment;
determining a destination of the at least one telegram fragment and setting an operating state of a processing device depending on the destination of the at least one telegram fragment; and
preparing a telegram block from the at least one telegram fragment;
determining a telegram boundary of the telegram block and a type of the telegram block in a first operating state;
determining a telegram boundary of the telegram block and driving a sending device in a second operating state such that the sending device sends a telegram subsequent to the telegram boundary.

12. A program element for communicating between measuring apparatuses on a shared network infrastructure, which program element, when executed on a processor, controls the following method:
receiving at least one telegram fragment;
determining a destination of the at least one telegram fragment and setting an operating state of a processing device depending on the destination of the at least one telegram fragment; and
preparing a telegram block from the at least one telegram fragment;
determining a telegram boundary of the telegram block and a type of the telegram block in a first operating state;
determining a telegram boundary of the telegram block and driving a sending device in a second operating state such that the sending device sends a telegram subsequent to the telegram boundary.

13. A computer-readable storage medium in which a program for communicating between measuring apparatuses on a shared network infrastructure is stored, which program, when executed on a processor, controls the following method:
receiving at least one telegram fragment;
determining a destination of the at least one telegram fragment and setting an operating state of a processing device depending on the destination of the at least one telegram fragment; and
preparing a telegram block from the at least one telegram fragment;
determining a telegram boundary of the telegram block and a type of the telegram block in a first operating state;
determining a telegram boundary of the telegram block and driving a sending device in a second operating state such that the sending device sends a telegram subsequent to the telegram boundary.

## Revendications

1. Dispositif de mesure (100) comprenant:
un dispositif de réception (104);
un dispositif de traitement (106);
un dispositif d'émission (105);
le dispositif de réception (104) étant conçu pour recevoir au moins un fragment de données télégraphiques (107);
le dispositif de réception (104) étant conçu pour déterminer une destination du au moins un fragment de données télégraphiques (107) et pour régler en fonction de la destination du au moins un fragment de données télégraphiques (107) un état de service du dispositif de traitement (106); et
le dispositif de réception (104) étant conçu pour élaborer, à partir du au moins un fragment de données télégraphiques (107), un bloc de données télégraphiques (108) ;
le dispositif de traitement (106) étant conçu dans un premier état de service (200) pour déterminer une limite de données télégraphiques du bloc de données télégraphiques (108) et un type du bloc de données télégraphiques (108);
le dispositif de traitement (106) étant conçu dans un second état de service (201) pour déterminer une limite de données télégraphiques du bloc de données télégraphiques (108) et pour commander le dispositif d'émission (105) de telle sorte que le dispositif (105) émet un télégramme à la suite de la limite de données télégraphiques.

2. Dispositif de mesure (100) selon la revendication 1, le dispositif de réception (104) étant conçu pour déterminer la destination au moyen d'une adresse (109).

3. Dispositif de mesure (100) selon l'une des revendications 1 et 2, le dispositif de traitement (106) étant par ailleurs conçu pour déterminer, dans le premier état de service (200), la limite de données télégraphiques d'un bloc de données télégraphiques de demande et d'un bloc de données télégraphiques de réponse.

4. Dispositif de mesure (100) selon l'une des revendications 1 à 3, le dispositif de réception (104) et/ou le dispositif d'émission (105) étant conçus dans le premier état de service (200) pour passer directement, après l'identification de la limite de données télégraphiques, dans un état de service prêt à la réception et/ou dans un état de service prêt à l'émission.

5. Dispositif de mesure (100) selon l'une des revendications 1 à 3, le dispositif de réception (104) et/ou le dispositif d'émission (105) étant conçus dans le second état de service (201) pour passer directement, après l'émission du télégramme, dans un état de service prêt à la réception et/ou dans un état de service prêt à l'émission.

6. Dispositif de mesure (100) selon l'une des revendications 1 à 5, le fragment de données télégraphiques (107) présentant la longueur d'un octet.

7. Dispositif de mesure (100) selon l'une des revendications 1 à 6, le dispositif de mesure (100) comprenant au moins un dispositif de mesure (100) sélectionné parmi le groupe des dispositifs de mesure constitué d'un appareil de champ, d'un acteur, d'un détecteur, d'un appareil d'évaluation, d'une passerelle, d'un Remote I/O, d'un appareil de commande, d'un appareil de mesure de niveau, d'un appareil de mesure de débit et d'un appareil de mesure de pression.

8. Dispositif de mesure (100) selon l'une des revendications 1 à 7, le dispositif de mesure (100) étant conçu pour le raccordement à un bus (103) et/ou à une ligne de radio-transmission (103).

9. Dispositif de mesure (100) selon l'une des revendications 1 à 8, le dispositif de mesure (100) étant conçu pour identifier des erreurs au moyen du déroulement d'horloges à minuterie.

10. Dispositif de mesure (100) selon l'une des revendications 1 à 9, le au moins un fragment de données télégraphiques (107) et/ou le bloc de données télégraphiques (108) étant conformes à au moins l'un des bus standard, sélectionné parmi le groupe des bus standard constitué du bus standard HART^{®}, du standard Profibus et d'un standard Fieldbus Foundation™.

11. Procédé de communication entre des dispositifs de mesure sur une infrastructure de réseau partagée, comprenant:
la réception d'au moins un fragment de données télégraphiques;
la détermination d'une destination du au moins un fragment de données télégraphiques et le réglage d'un état de service d'un dispositif de traitement en fonction de la destination du au moins un fragment de données télégraphiques; et
l'élaboration d'un bloc de données télégraphiques à partir du au moins un fragment de données télégraphiques;
la détermination d'une limite de données télégraphiques du bloc de données télégraphiques et d'un type du bloc de données télégraphiques dans un premier état de service;
la détermination d'une limite de données télégraphiques du bloc de données télégraphiques et la commande d'un dispositif d'émission dans un second état de service de telle sorte que le dispositif d'émission émet un télégramme à la suite de la limite de données télégraphiques.

12. Elément de programme pour la communication entre des dispositifs de mesure sur une infrastructure de réseau partagée, lequel élément de programme, lorsqu'il est réalisé par un processeur, commande le procédé suivant:
réception du au moins un fragment de données télégraphiques;
détermination d'une destination du au moins un fragment de données télégraphiques et réglage d'un état de service d'un dispositif de traitement en fonction de la destination du au moins un fragment de données télégraphiques; et
élaboration d'un bloc de données télégraphiques à partir du au moins un fragment de données télégraphiques;
détermination d'une limite de données télégraphiques du bloc de données télégraphiques et d'un type du bloc de données télégraphiques dans un premier état de service;
détermination d'une limite de données télégraphiques du bloc de données télégraphiques et commande d'un dispositif d'émission dans un second état de service de telle sorte que le dispositif d'émission émet un télégramme à la suite de la limite de données télégraphiques.

13. Support de données lisible par ordinateur, dans lequel est mémorisé un programme pour la communication entre des dispositifs de mesure sur une infrastructure de réseau partagée, lequel programme, lorsqu'il est réalisé par un processeur, commande le procédé suivant:
réception d'au moins un fragment de données télégraphiques;
détermination d'une destination du au moins un fragment de données télégraphiques et réglage d'un état de service d'un dispositif de traitement en fonction de la destination du au moins un fragment de données télégraphiques; et
élaboration d'un bloc de données télégraphiques à partir du au moins un fragment de données télégraphiques ;
détermination d'une limite de données télégraphiques du bloc de données télégraphiques et d'un type du bloc de données télégraphiques dans un premier état de service ;
détermination d'une limite de données télégraphiques du bloc de données télégraphiques et commande d'un dispositif d'émission dans un second état de service, de telle sorte que le dispositif d'émission émet un télégramme à la suite de la limite de données télégraphiques.
